# NEUE EUROPÄISCHE PATENTSCHRIFT

(11) **EP 0 800 548 B2**
(45) Veröffentlichungstag und Bekanntmachung des Hinweises auf die Entscheidung über den Einspruch: **05.03.2008**
(45) Hinweis auf die Patenterteilung: 03.04.2002
(21) Anmeldenummer: 96933435.8
(22) Anmeldetag: 30.09.1996
(51) Int. Cl.: C08G 69/36, C08G 69/16, C08G 69/18

(54) **POLYCAPROLACTAM MIT NEUARTIGER KETTENREGELUNG**
POLYCAPROLACTAM PRODUCED USING A NOVEL METHOD OF CHAIN CONTROL
POLYCAPROLACTAME PRODUIT PAR UN NOUVEAU PROCEDE DE REGULATION DE CHAINE

(30) Priorität: 09.10.1995 DE 19537614
(43) Veröffentlichungstag der Anmeldung: 15.10.1997
(73) Patentinhaber: INVENTA-FISCHER AG, 8708 Männedorf (CH)
(72) Erfinder: LIEDLOFF, Hanns-Jörg, CH-7013 Domat/Ems (CH); MORF, Ernst, CH-7013 Domat/Ems (CH); SCHMIDT, Gerhard, CH-7013 Domat/Ems (CH)
(74) Vertreter: Becker Kurig Straus
(86) Internationale Anmeldenummer: PCT/EP1996/004279
(87) Internationale Veröffentlichungsnummer: WO 1997/013800

(56) Entgegenhaltungen:
- EP-A- 0 822 275
- EP-B- 0 759 953
- WO-A-93/25736
- WO-A-95/28443
- US-A- 4 102 871
- US-A- 4 945 129
- DATABASE WPI Section Ch, Week 8407 Derwent Publications Ltd., London, GB; Class A23, AN 84-039660 XP002024417 & JP 59 001 531 A (DAICEL CHEM IND KK) , 6.Januar 1984

## Beschreibung

Die Erfindung betrifft den in den Patentansprüchen angegebenen Gegenstand.

Die Erfindung betrifft insbesondere Polycaprolactam (PA-6) mit neuartiger Kettenregelung.

Nieder- bis mittelviskoses Polycaprolactam (PA-6) für die Herstellung von Spritzgußmassen oder Fasern wird gewöhnlich durch Polymerisation von Caprolactam unter Mitverwendung von Kettenreglern wie Essigsäure oder anderen Monocarbonsäuren hergestellt. Auf diese Weise wird das Molekulargewicht des PA-6 auf den gewünschten Wert eingestellt und gleichzeitig die Viskositätsstabilität der PA-6-Schmelze bei der Verarbeitung gewährleistet. Unter nieder- bis mittelviskosem PA-6 sind hier extrahierte, d.h. weitgehend von Caprolactam befreite Produkte mit einer relativen Lösungsviskosität von 1,65 bis 1,95 zu verstehen, gemessen in 0,5 gew.-%iger Lösung in m-Kresol bei 20°C.

Die Herstellung von Fasern erfordert neben einer hohen Verarbeitungsstabilität eine definierte und konstante Aminoendgruppen-Konzentration, um eine gute Anfärbbarkeit sicherzustellen. Zur Erzielung guter Ergebnisse bei der Anfärbung mit z.B. sauren, in PA-6 löslichen Farbstoffen sollte die Aminoendgruppen-Konzentration in der Faser idealerweise 40-50 meq/kg betragen.

Bei den Spritzguß-Modifikationen von nieder- bis mittelviskosem PA-6 liegen die Verhältnisse insofern anders, als es dort eine Reihe von Produkten gibt, die erst bei signifikant tieferen Aminoendgruppen-Konzentrationen von 25-30 meq/kg des eingesetzten PA-6 in guter Qualität hergestellt werden können:

Zu diesen PA-6-Spritzgußmaterialien gehören unter anderem die folgenden Produkte bzw. Produktgruppen:
1. Schlagzähe PA6/(Co)Polyolefin-Mischungen mit zweiphasiger Morphologie, deren (Co)Polyolefin-Komponente mit ungesättigten Carbonsäuren bzw. Carbonsäurederivaten gepfropft oder auf andere Weise chemisch modifiziert ist. Typische Modifizierungsmittel sind z.B. (Meth)acrylsäure und deren Ester oder Maleinsäureanhydrid. Als (Co)Polyolefine werden z.B. Ethylen/Propylen/(Dien)-Copolymere (EP(D)M), Linear Low Density-Polyethylen (LLDPE) oder andere Polyethylen-Sorten verwendet.
   Es wird zwar empfohlen - z.B. in der US-PS 4945129 für derartige Blends PA-6 mit vergleichsweise hoher NH₂-Gruppen-Konzentration einzusetzen, der mögliche Gewinn an Schlag- bzw. Kerb-Schlagzähigkeit geht dann aber auf Kosten der Spritzgußverarbeitbarkeit. Insbesondere muß eine Verlängerung der Zykluszeiten und damit der Produktivität bei der Verarbeitung solcher Materialien in Kauf genommen werden. Darüberhinaus treten bei pigmentierten Materialien Probleme auf, die sich in der Ungleichmäßigkeit der Pigmentverteilung an den Fertigteiloberflächen äußern.
   Eine akzeptable Balance der oben genannten Eigenschaften wird erst durch die Verwendung von PA-6 mit vergleichsweise niedriger NH₂-Gruppen-Konzentration (25-30 meq/kg) erreicht.
2. Flammhemmendes PA-6, das mit speziellen organischen Stickstoffverbindungen modifiziert ist. Zu diesen Verbindungen, die der PA-6-Schmelze in Extrudern beigemischt werden, gehören z.B. Melamin, Melamincyanurat, Melaminphosphat und vergleichbare Materialien.

Das Brennverhalten derartiger Mischungen wird gewöhnlich im Brenntest nach Underwriters Laboratories getestet und gemäß der betreffenden UL-94-Norm eingestuft. Um die bestmögliche Klassierung (VO) zu erreichen, müssen PA-6-Qualität und die Qualität der flammhemmenden Stickstoffverbindung sehr gut aufeinander abgestimmt sein. Ein wichtiges Qualitätsmerkmal des PA-6 ist dabei der oben genannte Bereich der NH₂-Gruppen-Konzentration.

Aus den vorstehenden Ausführungen geht hervor, daß die Anforderungen an nieder- bis mittelviskoses PA-6 für Faser- und Spritzgußzwecke in bezug auf die Aminoendgruppen-Konzentration nicht ohne weiteres mit ein- und demselben Produkt erfüllt werden können. In der Patentliteratur und anderen einschlägigen Quellen finden sich keine Hinweise darauf, wie der Widerspruch in den Anforderungen an Faser- und Spritzguß-PA6 mit einem einheitlichen Produkt gelöst werden kann.

Die Aufgabe der vorliegenden Erfindung ist also die Bereitstellung von nieder- bis mittelviskosem PA-6 für Faser- und Spritzgußzwecke, welches den Anforderungen beider Anwendungen gleichermaßen genügt.

Die dieser Erfindung zugrundeliegende Aufgabe wird gelöst durch die Bereitstellung von PA-6 mit neuartiger Kettenregelung, dessen Herstellung durch hydrolytische, d.h. durch Wasser ausgelöste Polymerisation von Caprolactam (I) zusammen mit
- 0,1-0,7 Gew.-% einer aromatischen Dicarbonsäure (II)
- 0,01-0,6 Gew.-% eines aliphatischen oder cycloaliphatischen Diamins (III), welches eine primäre und eine tertiäre Aminogruppe trägt
und
- 0,01-0,6 Gew.-% 4-Amino-2,2,6,6-tetraalkyl-piperidin (IV)
erfolgt, wobei sich die Mengen der Komponenten I bis IV zu 100 Gew.-% ergänzen und die Menge der Komponenten III und IV 0,05-0,6 Gew.-% beträgt.

Als aromatische Dicarbonsäuren (II) werden bevorzugt Terephthalsäure und/oder Isophthalsäure verwendet, in einer Menge von vorzugsweise 0,2-0,6 Gew.-%.

Die Diaminkomponente III wird bevorzugt aus der Gruppe bestehend aus 3-(Dialkylamino)-1-propylaminen, 2-(Dialkylamino)-1-ethylaminen, Piperidino- und Pyrrolidinoalkylaminen, ausgewählt und in einer Menge von 0,01-0,6 Gew.-% verwendet.

Beispiele für III sind 3-(Dimethylamino)-1-propylamin und 2-Piperidino-ethylamin.

Als Diaminkomponente IV wird bevorzugt4-Amino-2,2,6,6-tetramethylpiperidin in einer Menge von 0,01-0,6 Gew.-% verwendet. Die Menge der Diaminkomponenten III und IV beträgt 0,05-0,6 Gew.-%.

Die Herstellung des erfindungsgemäßen PA-6 erfolgt nach kontinuierlichen oder chargenweisen Verfahren, wie sie seit langem bekannt sind. Auf die bekannten und in der industriellen Praxis erprobten Zusammenhänge zwischen Kettenreglermenge, Wassergehalt der Reaktionsmischung und Temperaturführung und Reaktionsdauer einerseits und Caprolactamumsatz sowie dem erzeugten Molekulargewicht von PA-6 andererseits muß hier nicht näher eingegangen werden. Speziell beim kontinuierlichen Verfahren zur Herstellung von PA-6 in senkrechtstehenden Rohrreaktoren liegen genügend Erfahrungen vor, die es den Betreibern derartiger Anlagen erlauben, ihre PA-6-Produktion ohne nennenswerte Probleme auf das erfindungsgemäße PA-6 mit seiner neuartigen Kettenregelung umzustellen.

Die chargenweise Herstellung des erfindungsgemäßen PA-6 ist ebenfalls problemlos durchführbar.

Daß ein so geartetes PA-6 erhebliche Vorteile für die Produktion mit sich bringt, liegt auf der Hand: Die Häufigkeit von Produktumstellungen kann so reduziert werden. Produktumstellungen in den heute üblichen PA-6-Polymerisationsanlagen, die praktisch ausschließlich nach kontinuierlichen Verfahren und mit Durchsätzen von ca. 50-200 Tagestonnen betrieben werden, will der PA-6-Hersteller nach Möglichkeit auf ein Minimum begrenzen. Jede Umstellung ist mit der Produktion mit sogenanntem Übergangsmaterial verbunden, das mengenmäßig mehrere Tagesproduktionen ausmachen kann und dessen Einordnung in bestehende Produktspezifikationen schwierig ist.

Das erfindungsgemäße PA-6 mit neuartiger Kettenregelung zeigt die erwünschten Eigenschaften, wie sie eingangs für die Faserherstellung und bestimmte Spritzgußanwendungen definiert wurden. In den Beispielen sind diese Eigenschaften näher erläutert.

Die Polymerisation des erfindungsgemäßen PA-6 erfolgte chargenweise in einem 130 I-Autoklaven. Zu diesem Zweck wurden jeweils 45 kg flüssiges Caprolactam bei 90°C zusammen mit 7 I Wasser und den in der Tabelle 1 angegebenen Mengen an Terephthalsäure und Diaminen in einem rührbaren mit Stickstoff inertisierten Vorlagegefäß vermischt und die homogene Mischung anschließend in den genannten Autoklaven überführt und dort unter inerten Bedingungen (N₂) polymerisiert. Bei der Polymerisation wurden einheitlich etwa die folgenden Bedingungen eingehalten:

| | | |
|---|---|---|
| Stufe 1 (Druckphase) | Massetemperatur | 290°C |
| | Druck | 20 bar |
| | Dauer | 2 Stunden |
| Stufe 2 (Entspannung) | Massetemperatur | von 290 auf 260°C |
| | Druck | von 20 auf 1 bar |
| | Dauer | 1,5 Stunden |
| Stufe 3 (Entgasung) | Massetemperatur | 260°C |
| | Druck | 1 bar |
| | Schleppgas | Stickstoff |
| | Dauer | 4-6 Stunden |

Bei Erreichen der gewünschten Viskosität wurden die einzelnen Chargen als Polymerstränge abgepreßt, nach Durchlaufen eines Wasserbads granuliert, mit Wasser extrahiert und getrocknet.

Als Maß für die Viskosität der PA-6-Schmelze wurde die Drehmomentanzeige des Rührwerks des Autoklaven zugrundegelegt.

Je 40 kg jeder Charge wurden in 16 h bei 80°C mit 2400 I Frischwasser pro Stunde extrahiert. Die Trocknung erfolgte bei 110°C über 24 h im Vakuum.

Die relative Lösungsviskosität von extrahiertem und getrocknetem PA-6 wurde in 0,5 gew.-%iger Lösung in m-Kresol bei 20°C bestimmt.

Die Bestimmung der Endgruppen-Konzentrationen erfolgte mittels acidimetrischer Titration. Die Aminoendgruppen werden in m-Kresol/iso-Propanol 2:1 (Gew.-Teile) als Lösungsmittel mit 0,1-normaler ethanolischer Perchlorsäure titriert. Die Titration der Carboxylendgruppen erfolgte in Benzylalkohol als Lösungsmittel mit 0,1-normalem benzylalkoholischem Kaliumhydroxid.

Als Vergleichsmaterialien wurden die folgenden mit Essigsäure geregelten extrahierten PA-6-Typen eingesetzt:
- Fasertype (Nr. 5): mit einer relativen Lösungsviskosität von 1,78 und einer Carboxyl- bzw. Aminoendgruppen-Konzentration von 56 bzw. 46 meq/kg;
- Spritzgußtype (Nr. 6): mit einer relativen Viskosität von 1,77 und einer Carboxyl- bzw. Aminoendgruppen-Konzentration von 57 bzw. 29 meq/kg.

Die in den Beispielen verwendeten Abkürzungen haben folgende Bedeutung:
- LC6:: Caprolactam
- TPS:: Terephthalsäure
- DMAPA:: 3-(Dimethylamino)-1-propylamin
- TMPA:: 4-Amino-2,2,6,6-tetramethyl-piperidin
- PEA:: 2-Piperidino-ethylamin
- RV:: Relative Lösungsviskosität (0,5-gew.-%ig/m-Kresol)
- COOH:: Carboxylendgruppen-Konzentration
- Amin:: Aminoendgruppen-Konzentration
- KSZ:: Kerbschlagzähigkeit (im trockenen Zustand)
- TK:: Kühlzeit
- T_{Z}:: Zykluszeit

Die genannten Diamine wurden von der Firma FLUKA (Buchs/Schweiz) bezogen.

### BEISPIELE

### 1. Polymere

Diesbezüglich wird auf die nachfolgende Tabelle 1, Beispiele 1a, 1b, 2a, 2b, 3 und 4 verwiesen.

**Tabelle 1: Charakterisierung des erfindungsgemäßen PA-6 (extrahiert und getrocknet**

| | Rohstoffe | | | | | | | | | | RV | COOH [meq/kg] | Amin¹⁴ [meq/kg] |
|---|---|---|---|---|---|---|---|---|---|---|---|---|---|
| Beispiel | LC-6 | | TPS | | DMAPA | | TMPA | | PEA | | | | |
| | (kg) | Gew.-°,6 | [kg] | Gew.-% | [kg] | Gew.-% | [kg] | Gew.-% | [kg] | Gew.-% | | | |
| 1a* | 45 | 99.436 | 0.20 | 0,442 | 0,055 | 0.122 | | | | | 1,765 | 78 | 42 |
| 1b* | 45 | 99,436 | 0,20 | 0,442 | 0,055 | 0,122 | | | | | 1,753 | 79 | 45 |
| 2a* | 45 | 99,373 | 0.20 | 0,442 | | | 0,084 | 0,185 | | | 1,793 | 74 | 38 |
| 2b* | 45 | 99.373 | 0,20 | 0,442 | | | 0,084 | 0,185 | | | 1.774 | 76 | 42 |
| 3* | 45 | 99,405 | 0.20 | 0,442 | | | | | 0,069 | 0,153 | 1,755 | 77 | 43 |
| 4 | 45 | 99,403 | 0,20 | 0,442 | 0.028 | 0,062 | 0,042 | 0,093 | | | 1,763 | 79 | 44 |

| | | | | | | | | | | | | | |
|---|---|---|---|---|---|---|---|---|---|---|---|---|---|
| 1 Die gemessenen Aminoendgruppen-Konzentrationensetzen sich offensichtlich zusammen aus der Konzentration von primären Aminogruppen (-NH₂) in allen Fällen, tertiären Aminogruppen ((CH₃Cl₂-N- bei Beispiel 1a) und 1b) bzw. Piperidino-Endgruppen bei Beispiel 3) und sekundären Aminogruppen (2,2,6,6-Tetramethyl-4-piperidyl-Reste im Fall der Beispiele 2a und 2b). Im Fall von Beispiel 4 treten alle genannten Arten von Aminoendgruppen auf. * nicht erfindungsgemäß | | | | | | | | | | | | | |

### 2. Herstellung und Prüfung modifizierter Spritzgußmassen

### 2.1 Flammhemmende Produkte

90 Gew.-Teile PA-6 werden mit 10 Gew.-Teilen feinteiligem Melamincyanurat in einem Zweiwellenextruder ZSK-30 (L/D=42) der Firma Werner & Pfleiderer (Stuttgart/Deutschland) bei Extrudertemperaturen von 240-250°C und einem Durchsatz von insgesamt 9 kg/h in der Schmelze (PA-6) vermischt.

Das PA-6-Granulat wird vor dem Compoundierschritt mit dem Melamincyanurat trocken vorgemischt.

Die fertige Mischung wird nach Abkühlen der Stränge in einem Wasserbad granuliert und dann bei 110°C über 24 Stunden im Vakuum getrocknet.

Die getrockneten Granulate werden zu 127 x 12,7 x 0,8 (mm)-Prüfstäben spritzgegossen und dem Brenntest nach UL-94 unterworfen.
Die Ergebnisse dieses Tests finden sich in Tabelle 2:

**Tabelle 2:**

| UL 94-Test von PA6/Melamincyanurat-90/10-Mischungen | | |
|---|---|---|
| Beispiel | Verwendetes PA-6 | Ergebnis |
| 5 | aus Beispiel 3 | V0 |
| 6 (Vergleichsbeispiel) | Fasertyp (Nr. 5) | V2 |
| 7 (Vergleichsbeispiel) | Spritzgußtyp (Nr. 6) | V0 |

Die Ergebnisse weisen das PA-6 gemäß Beispiel 3 als sehr gut geeignet für diese Art der Modifikation aus.

### 2.2 Schlagzähmodifizierte Produkte

80 Gew.-Teile PA-6 werden zusammen mit 20 Gew.-Teilen eines mit 0,5 Gew.-% Maleinsäureanhydrid gepfropften Ethylen/Propylen-Copolymeren (Molverhältnis Ethylen/Propylen: 80/20; Mooney-Viskosität: 21 (ML1 +4 bei 125°C)), und 1 Gew.-Teil Glyzerinmonostearat der Firma AG Vogel (Zürich/Schweiz) sowie 0,63 Gew.-Teilen Weisspigment Sachtolith HDS der Fa. Sachtleben (Duisburg/-Deutschland) und 0,05 Gew.-Teilen Farbruß FW2 der Fa. Degussa (Baar/Schweiz) in einem Zweiwellenextruder (WPF ZSK-30; L/D = 42) vermischt. Die Extrudertemperatur beträgt 250-260°C und der Durchsatz 10 kg/Stunde.

Die Mischungen wurden auf die gleiche Weise granuliert und getrocknet wie vorstehend für die flammhemmenden Produkte beschrieben.

Die Granulate wurden dann zu Prüfkörpern spritzgegossen: Für die Messung der Kerbschlagzähigkeit nach Charpy, im trockenen Zustand wurden Prüfkörper gemäß ISO-179 hergestellt (80 x 10 x 4 mm-Stäbe; Massetemperatur: 265°C; Formtemperatur: 80°C).

Zur Prüfung der Verarbeitbarkeit wurden diese Mischungen zu einem komplizierten Spritzgußteil mit langen Entformungswegen und Kern verarbeitet (Teil in Form des Firmensignets mit Stangenanguß und einem Schußgewicht von ca. 105 g). Die Massetemperatur lag in allen Fällen bei 265°C, die Formtemperatur betrug konstant 80°C. Bei diesen Verarbeitungstests wurde die Kühlzeit (Nachdruckzeit mit eingeschlossen) ermittelt, die mindestens nötig ist, um noch eine einwandfreie Entformung (kein Verzug, keine tiefen Auswerfermarkierungen auf den Teilen) zu gewährleisten. Zusätzlich wurde das Aussehen der dunkelgrauen Spritzgußteile beurteilt.

Die Ergebnisse finden sich in der nachstehenden Tabelle 3 und bestätigen die vorteilhaften Eigenschaften des erfindungsgemäßen Polyamid 6.

**Tabelle 3: Prüfung der schlagzähmodifizierten Produkte**

| Beispiel | Verwendetes PA-6 | KSZ [kJ/m²] | | Verarbeitungstest | | |
|---|---|---|---|---|---|---|
| | | 23°C | -30°C | Tₖ[sec] | T_{z}[sec] | Aussehen der Spritzgußteile |
| 8 | aus Beispiel 4 | 70 | 15 | 85 | 96 | einwandfreie, gleichmäßige Einfärbung |
| 9 (Vergl.-Beisp.) | Fasertyp (Nr. 5) | 83 | 17 | 95 | 107 | ungleichmäßige Einfärbung; d.h. hell-/dunkelgraue Schlieren und Flecken |
| 10 (Vergl.-Beisp.) | Spritzgußtyp (Nr. 6) | 75 | 15 | 83 | 95 | einwandfreie gleichmäßige Einfärbung |

### 3. Faserherstellung und Prüfung der Anfärbbarkeit

Die einzelnen PA-6-Typen werden auf einer Spinnanlage versponnen:
Durchsatz: 1,5 g pro Minute und Kapillare
Schmelztemperatur: 262-264°C
Fadenabkühlung: mittels Querstromanblasung
Abzugsgeschwindigkeit: 4200 m pro Minute

Neben den Produkten 1a/b (Beispiel 1a und 1b) und 2a/b (Beispiel 2a und 2b) - jeweils als Granulatabmischungen- wurden zum Vergleich der Fasertyp (Nr. 5) und der Spritzgußtyp (Nr. 6) versponnen.

Die Anfärbung mit Irgalanbraun 2RL (Ciba Geigy; Basel/Schweiz) ergab hinsichtlich Farbtiefe und -gleichmäßigkeit gute Ergebnisse für 1a/b, 2a/b und das Vergleichsmaterial Nr. 5 und ein mäßiges Resultat für den Spritzgußtyp Nr. 6.

## Patentansprüche

1. Kettengeregeltes, hydrolytisch polymerisiertes Polyamid 6, **dadurch gekennzeichnet, daß** die Polymerisation von Caprolactam (I) zusammen mit
- 0,1-0,7 Gew.-% einer aromatischen Dicarbonsäure (II),
- 0,01-0,6 Gew.-% eines aliphatischen oder cycloaliphatischen Diamins (III), welches eine primäre und eine tertiäre Aminogruppe trägt,
- 0,01-0,6 Gew.-% 4-Amino-2,2,6,6-tetraalkyl-piperidin (IV)
erfolgt, wobei sich die Mengen der Komponenten I bis IV zu 100 Gew.-% ergänzen und die Menge der Komponenten III und IV 0,05-0,6 Gew.-% beträgt.

2. Kettengeregeltes Polyamid 6 gemäß Anspruch 1, **dadurch gekennzeichnet, daß** die Menge der aromatischen Dicarbonsäure (II) 0,2-0,6 Gew.-% beträgt.

3. Kettengeregeltes Polyamid 6 gemäß Ansprüchen 1 und 2, **dadurch gekennzeichnet, daß** als aromatische Dicarbonsäure (II) Terephthalsäure und/oder Isophthalsäure verwendet wird.

4. Kettengeregeltes Polyamid 6 gemäß Anspruch 1, **dadurch gekennzeichnet, daß** als Komponente IV 4-Amino-2,2,6,6-tetramethylpiperidin verwendet wird.

## Claims

1. Chain regulated, hydrolytically polymerized polyamide 6 **characterized in that** said polymerization of caprolactam (I) is performed together with
- 0.1-0.7 wt.-% of an aromatic dicarboxylic acid (II),
- 0.01-0.6 wt.-% of an aliphatic or cycloaliphatic diamine (III) carrying a primary and tertiary amino group,
- 0.01-0.6 wt.-% of 4-amino-2,2,6,6-tetraalkylpiperidine (IV)
wherein said quantities of said components I to IV make up 100 wt.-% and said quantities of said components III and IV are 0.05-0.6 wt.-%.

2. Chain regulated polyamide 6 according to claim 1 **characterized in that** said quantity of said aromatic dicarboxylic acid (II) is 0.2-0.6 wt.-%.

3. Chain regulated polyamide 6 according to claims 1 and 2 **characterized in that** terephthalic acid and/or isophthalic acid are used as aromatic dicarboxylic acid (II).

4. Chain regulated polyamide 6 according to claim 1 **characterized in that** 4-amino-2,2,6,6-tetramethylpiperidine is used as component IV.

## Revendications

1. Polyamide 6 à chaînes régulées, polymérisé par hydrolyse, **caractérisé en ce que** la polymérisation de caprolactame (I) se produit avec
- 0,1-0,7 % en poids d'un acide dicarboxylique aromatique (II),
- 0,01-0,6 % en poids d'une diamine aliphatique ou cycloaliphatique (III) qui porte un groupement amine primaire ou tertiaire,
- 0.01-0.6 % en poids de 4-amino-2,2,6,6-tétra-alkyle-pipéridine (IV)
les quantités des composants I à IV se complétant de manière à obtenir 100% en poids et les quantités des composants III et IV 0,05-0,6 % en poids.

2. Polyamide 6 à chaînes régulées selon la revendication 1, **caractérisé en ce que** la quantité d'acide dicarboxylique aromatique (II) représente 0,2-0,6 % en poids.

3. Polyamide 6 à chaînes régulées selon l'une quelconque des revendications 1 ou 2, **caractérisé en ce que** l'acide téréphthalique et/ou l'acide isophthalique sont utilisés comme acide dicarboxylique aromatique (II).

4. Polyamide 6 à chaînes régulées selon la revendication 1, **caractérisé en ce que** la 4-amino-2,2,6,6-tétra-alkyle-pipéridine est utilisée comme composant IV.
